# EUROPÄISCHE PATENTSCHRIFT

(11) **EP 0 706 846 B1**
(45) Veröffentlichungstag und Bekanntmachung des Hinweises auf die Patenterteilung: **09.12.1998**
(21) Anmeldenummer: 95810455.6
(22) Anmeldetag: 11.07.1995
(51) Int. Cl.: B23B 51/04

(54) **Bohreinheit mit Hohlbohrkrone und Zentrierbohrer**
Drill unit with tubular drill and pilot drill
Unité de forage avec foret tubulaire et foret de centrage

(30) Priorität: 15.10.1994 DE 4436917
(43) Veröffentlichungstag der Anmeldung: 17.04.1996
(73) Patentinhaber: HILTI Aktiengesellschaft, 9494 Schaan (LI)
(72) Erfinder: Kleine, Werner, D-28832 Achim (DE)
(74) Vertreter: Wildi, Roland

(56) Entgegenhaltungen:
- DE-A- 1 652 518
- GB-A- 104 800

## Beschreibung

Die Erfindung betrifft eine Bohreinheit für Beton, Gestein oder dergleichen mit Hohlbohrkrone und Zentrierbohrer, wobei der Zentrierbohrer in dem der Bohrrichtung entgegengesetzten Endbereich einen Aufnahmeschaft sowie in dem in Bohrrichtung weisenden Endbereich einen Bohrkopf aufweist und die Hohlbohrkrone derart durchsetzt, dass deren bohrrichtungsseitiger Stirnbereich vom Bohrkopf und deren der Bohrrichtung entgegengesetzter Stirnbereich vom Aufnahmeschaft überragt wird, und dass zwischen Zentrierbohrer und Hohlbohrkrone eine lösbare Verbindung vorgesehen ist. Eine Bohreinheit dieser Art ist z.B. aus DE-A-1652518 bekannt.

Bohreinheiten mit einer Hohlbohrkrone der eingangs genannten Art werden in Verbindung mit Antriebsgeräten betrieben, welche zumindest zur Abgabe einer Drehbewegung und in gewissen Fällen auch zur Abgabe einer Schlagbewegung ausgelegt sind. Eingesetzt werden die Bohreinheiten in diese Antriebsgeräte mittels eines Aufnahmeschaftes, welcher auf das jeweils zur Anwendung gelangende Antriebsgerät abgestimmt ist.

Um einem Verlaufen auf oder in dem zu bearbeitenden Material - wie Mauerwerk, Beton, Gestein oder dergleichen - sowohl während des Anbohrens als auch während des weiteren Bohrvorganges entgegenzuwirken, sind die bekannten Bohreinheiten mit einem Zentrierbohrer versehen, welcher an dem in Bohrrichtung weisenden Endbereich einen Bohrkopf aufweist.

Insbesondere aus logistischen Gründen sind bekannte Bohreinheiten nach einem Baukastenprinzip aufgebaut, dh Aufnahmeschaft, Bohrkopf des Zentrierbohrers sowie Hohlbohrkrone bilden einzelne Teile und werden je nach Bedarfsfall zusammengebaut. Ein solcher Aufbau hat wohl logistische Vorteile, setzt jedoch beim Anwender ausreichende Fachkenntnisse und ein gewisses Geschick voraus. Ausserdem werden an die Verbindungsstellen der einzelnen Teile recht hohe Ansprüche gestellt, so dass ein einwandfreier Zusammenbau dieser erheblichen Beanspruchungen und Verschmutzungen ausgesetzten Teile gewährleistet ist. Insbesondere bereitet die Verbindung des Bohrkopfes des Zentrierbohrers mit den übrigen Teilen erhebliche Schwierigkeiten, um einerseits eine einwandfreie Verbindung und andererseits auch wieder ein Lösen sicherzustellen.

Um den vorgenannten Nachteilen, welche insbesondere aufgrund der anspruchsvollen Verbindungsstellen auch zu einer Verteuerung aller Teile geführt haben, entgegenzuwirken, ist aus der CH-PS 185 076 eine Bohreinheit bekannt geworden, bei welcher ein Zentrierbohrer derart einstückig ausgebildet ist, dass an einem Ende ein Aufnahmeschaft und am anderen Ende, weiches in Bohrrichtung weist, ein Bohrkopf vorhanden ist. Dieser einstückig ausgebildete Zentrierbohrer ist fest mit der Hohlbohrkrone verbunden.

Eine weitere Bohreinheit ist aus der DE-A-1652518 bekannt. Diese Bohreinheit weist eine Hohlbohrkrone und einen Zentrierbohrer auf, der in einem der Bohrrichtung entgegengesetzten Endbereich mit einem Aufnahmeschaft sowie in dem in Bohrrichtung weisenden Endbereich mit einem Bohrkopf versehen ist. Der Zentriebohrer durchsetzt die Hohlbohrkrone derart, dass der bohrrichtungsseitige Stirnbereich der Hohlbohrkrone von dem Bohrkopf und deren der Bohrrichtung entgegengesetzter Stirnbereich vom Aufnahmeschaft überragt wird. Zwischen dem Zentrierbohrer und der Hohlbohrkrone ist eine lösbare Verbindung in Form einer Klemmschraube vorgesehen, die in einem Gewinde der Hohlbohrkrone angeordnet ist und seitlich gegen den Zentrierbohrer drückt.

Ein Bohrwerkzeug das sich zum Erzeugen von kreisrunden Öffnungen in Kisten aus Holz eignet ist aus der GB-A-104800 bekannt. Dieses Bohrwerkzeug weist eine Hohlbohrkrone, einen Aufnahmeteil und einen Zentrierbohrer auf. Die Hohlbohrkrone wird gebildet von einem rohrförmigen Trägerkörper der mit einem zweiteiligen Boden in Verbindung steht. Der Boden wird durchsetzt von einem Aufnahmeteil. Zwischen dem Boden und dem Aufnahmeteil ist eine lösbare Verbindung in Form eines Schraubgewindes vorgesehen. Das Aufnahmeteil weist einen bohrrichtungsseitig offen ausgebildeten, sacklochartigen Aufnahmebereich auf, der der Aufnahme eines Aufnahmeschaftes des Zentrierbohrers dient. Eine axiale Festlegung des Zentriebohrers in dem Aufnahmeteil erfolgt mittels eines an dem Aufnahmeteil verdrehbar angeordneten Stiftes.

Mit dieser bekannten Bohreinheit werden die genannten Verbindungsprobleme gelöst, so dass eine recht wirtschaftliche Lösung erzielbar ist. Allerdings darf nicht ausser acht gelassen werden, dass sich verschiedene Antriebsgeräte für solche Bohreinheiten auf dem Markt befinden und somit wieder ein Anpassen des Aufnahmeschaftes an das zur Anwendung gelangende Antriebsgerät erforderlich ist. Darüber hinaus besteht je nach Anwendungsfall das Bedürfnis, die Länge der Bohreinheit durch Verwendung bestimmter Bohrkronen mit bestimmten Aufnahmeschäften zu variieren.

Mit der genannten, bekannten Bohreinheit lassen sich Anpassungen, insbesondere hinsichtlich Antriebsgeräten und Anwendungsfällen nicht vornehmen, so dass wiederum logistische Probleme entstehen, da jedem Antriebsgerät und jedem Anwendungsfall eine bestimmte Bohreinheit zugeordnet werden muss.

Der Erfindung liegt die Aufgabe zugrunde, eine Bohreinheit zu schaffen, welche einerseits wirtschaftliche sowie handhabungstechnische Vorteile aufweist und andererseits eine Anpassung an die in Betracht kommenden Anwendungsfälle zulässt.

Erfindungsgemäss wird die Aufgabe dadurch gelöst, dass die lösbare Verbindung als Schraubgewinde ausgebildet ist, wobei sich das Muttergewinde an der Hohlbohrkrone und das Bolzengewinde an dem Zentrierbohrer befindet.

Dadurch, dass der Zentrierbohrer einstückig aus Aufnahmeschaft und Bohrkopf besteht, ist nach der erfindungsgemässen Lösung lediglich noch eine Verbindungsstelle, nämlich zwischen Zentrierbohrer und Hohlbohrkrone, vorhanden. Damit ist die Problematik der Verbindung des Bohrkopfes des Zentrierbohrers mit weiteren Teilen behoben. Die lösbare Verbindung zwischen Zentrierbohrer und Hohlbohrkrone stellt aber dennoch eine Anpassung an die in Betracht kommenden Anwendungsfälle sicher, indem Zentrierbohrer mit unterschiedlich langen Aufnahmeschäften mit für den jeweiligen Anwendungsfall geeigneten Hohlbohkronen kombiniert werden können. Ebenso lassen sich Hohlbohrkronen unterschiedlicher Durchmesser mit dem jeweiligen Anwendungsfall entsprechenden Aufnahmeschaft kombinieren. Sollten Hohlbohrkrone oder Zentrierbohrer einem vorzeitigen Verschleiss unterliegen, kann das jeweils verschlissene Teil mit einem neuen Teil bestückt werden, so dass nicht die gesamte Bohreinheit ersetzt werden muss, was zu weiteren wirtschaftlichen Vorteilen führt.

Die als Schraubgewinde ausgebildete lösbare Verbindung ist gegebenenfalls mit entsprechenden Endanschlägen verbunden und stellt eine sichere und jederzeit wieder lösbare Verbindung dar. Es können die an sich bekannten Formen für Schraubgewinde in Betracht kommen wie Rundgewinde, Trapezgewinde und dergleichen sowie Abwandlungen solcher Schraubgewinde.

Die Erfindung wird nachstehend anhand einer Zeichnung, welche ein teilweise geschnittenes Ausführungsbeispiel einer Bohreinheit zeigt, näher erläutert.

Die Bohreinheit besteht aus Hohlbohrkrone 1 und Zentrierbohrer 2, wobei die Hohlbohrkrone 1 und der Zentrierbohrer 2 über ein Schraubgewinde 3 lösbar miteinander verbunden sind.

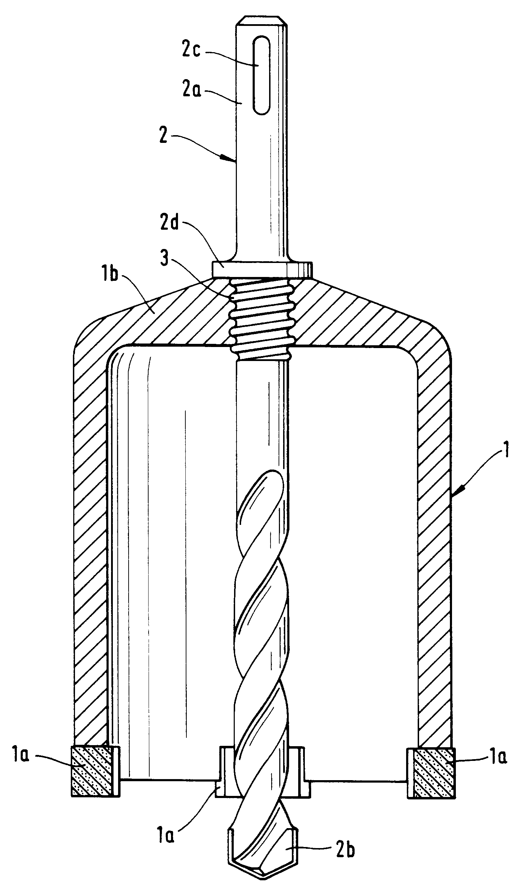

Wie die Figur ferner zeigt, ist der Zentrierbohrer 2 in dem der Bohrrichtung entgegengesetzten Endbereich mit einem Aufnahmeschaft 2a und in dem in Bohrrichtung weisenden Endbereich mit einem Bohrkopf 2b versehen. Der Aufnahmeschaft 2a ist mit einer an sich bekannten Nut 2c versehen, in welche Mitnahmeelemente des Anwendung findenden Antriebsgerätes eingreifen können. Die Hohlbohrkrone 1 ist in bekannter Weise glockenförmig ausgebildet, wobei der bohrrichtungsseitige Stirnbereich Schneidelemente 1a aufweist. Dieser mit Schneidelementen 1a versehene Stirnbereich der Bohrkrone 1 wird vom Bohrkopf 2b in Bohrrichtung überragt.

In dem der Bohrrichtung abgewandten Endbereich weist die Hohlbohrkrone 1 einen Boden 1b auf, welcher der Aufnahme des einen Teils des Schraubgewindes 3 dient. Der andere Teil des Schraubgewindes 3 befindet sich am Zentrierbohrer 2 und zwar in Bohrrichtung anschliessend an einen Bund 2d, welcher einen Endanschlag zur Begrenzung des Aufschraubewegs der Hohlbohrkrone 1 bildet. Ueber diesen Bund 2d werden gegebenenfalls vom Antriebsgerät abgegebene Schläge auf die Hohlbohrkrone 1 übertragen, ohne dass dabei das Schraubgewinde 3 übermässig beansprucht wird.

## Patentansprüche

1. Bohreinheit für Beton, Gestein oder dergleichen mit Hohlbohrkrone (1) und Zentrierbohrer (2), wobei der Zentrierbohrer (2) in dem der Bohrrichtung entgegengesetzten Endbereich einen Aufnahmeschaft (2a) sowie in dem in Bohrrichtung weisenden Endbereich einen Bohrkopf (2b) aufweist und die Hohlbohrkrone (1) derart durchsetzt, dass deren bohrrichtungsseitiger Stirnbereich vom Bohrkopf (2b) und deren der Bohrrichtung entgegengesetzter Stirnbereich vom Aufnahmeschaft (2a) überragt wird und dass zwischen Zentrierbohrer (2) und Hohlbohrkrone (1) eine lösbare Verbindung vorgesehen ist, **dadurch gekennzeichnet**, dass die lösbare Verbindung als Schraubgewinde (3) ausgebildet ist, wobei sich das Muttergewinde an der Hohlbohrkrone (1) und das Bolzengewinde an dem Zentrierbohrer (2) befindet.

## Claims

1. A drilling unit for concrete, stone or the like, having a hollow drill bit (1) and a centre drill (2), wherein the centre drill (2) has a receiver shank (2a) in its end region opposite to the direction of drilling and has a drill bit (2b) in its end region facing the direction of drilling, and passes through the hollow drill bit (1) in such a way that the drill bit (2b) projects beyond the end region of the hollow drill bit in the direction of drilling and the receiver shank (2a) projects beyond the end region of the hollow drill bit in the direction opposite to the direction of drilling, and that a detachable connection is provided between the centre drill (2) and the hollow drill bit (1), **characterised in that** the detachable connection is constructed as a screw thread (3), wherein the female thread is situated on the hollow drill bit (1) and the male thread is situated on the centre drill (2).

## Revendications

1. Unité de forage pour béton, roche ou analogue, comprenant un foret tubulaire (1) et un foret de centrage (2), le foret de centrage (2) comportant, dans la zone d'extrémité située à l'opposé de la direction de forage, une queue de fixation (2a) et, dans la zone d'extrémité tournée dans la direction de forage, une tête de forage (2b), et traversant le foret tubulaire (1) de façon que la tête de forage (2b) dépasse de la zone frontale dudit foret tubulaire située côté direction de forage et que la queue de fixation (2a) dépasse de la zone frontale dudit foret tubulaire située à l'opposé de la direction de forage, et qu'une liaison détachable soit prévue entre le foret de centrage (2) et le foret tubulaire (1), caractérisée en ce que la liaison détachable est conçue sous la forme d'une liaison filetée (3), le filetage femelle se trouvant sur le foret tubulaire (1) et le filetage mâle se trouvant sur le foret de centrage (2).
